# EUROPÄISCHE PATENTANMELDUNG

(11) **EP 2 259 398 A2**
(43) Veröffentlichungstag der Anmeldung: **08.12.2010**
(21) Anmeldenummer: 10158728.5
(22) Anmeldetag: 31.03.2010
(51) Int. Cl.: H02G 1/12

(54) **Abmantelungswerkzeug**

(30) Priorität: 03.06.2009 DE 102009025908
(71) Anmelder: Krampe, Josef, D-59387 Ascheberg (DE)
(72) Erfinder: Grosserichter, Heinrich, 59387, Ascheberg (DE)
(74) Vertreter: Hanewinkel, Lorenz

(57) **Zusammenfassung**

Die Erfindung beschreibt ein Abmantelungswerkzeug zur Entfernung der Isolierung ein-oder mehradriger Kabel durch zwei Backen (1, 2), die über gemeinsame Gelenkachsen (3,4) zu einem für die Aufnahme des zu entmantelnden Kabels aufklappbaren Hohlkörper miteinander verbunden sind und nahe ihren Enden mit Schneiden (14, 15) für den Rundschnitt versehen sind und gegenüber den Schneiden am anderen Ende an der Gelenkachse ein Schlitzmesser (16) aufweisen, wobei das Schlitzmesser (16) sich in einer im Hohlkörper schräg liegenden Führungsmulde (19) befindet und in die den Hohlkörper schließenden Längskanten (11, 12) Ausnehmungen (17, 18) so eingebracht sind, dass bei geschlossenem Werkzeug ein Kabel (20) für das Längsschlitzen mittels der Führungsmulde (19) und den Ausnehmungen (17, 18) derart durch den Hohlkörper geführt ist, dass das Kabel sauber an dem Schlitzmesser (16) für den Längsschnitt in der Führungsmulde (19) geführt ist, ohne dass es einer weiteren Führung des Kabels durch die Finger bedarf.

## Beschreibung

Die Erfindung betrifft ein Abmantelungswerkzeug zur Entfernung der Isolierung ein- oder mehradriger Kabel durch zwei Backen, die über gemeinsame Gelenkachsen zu einem für die Aufnahme des zu entmantelnden Kabels aufklappbaren Hohlkörper miteinander verbunden sind und nahe ihren Enden mit Schneiden für den Rundschnitt versehen sind und gegenüber den Schneiden am anderen Ende an der Gelenkachse ein Schlitzmesser aufweisen, wobei das Schlitzmesser sich in einer im Hohlkörper schräg liegenden Führungsmulde befindet.

Zur Entfernung des Isoliermantels an Kabeln ist aus dem Gebrauchsmuster DE 298 14 771 U1 ein Abisolierwerkzeug bekannt, das aus zwei Backen besteht, die über gemeinsame Gelenkachsen zu einem für die Aufnahme des zu entmantelnden Kabels aufklappbaren Hohlkörper miteinander verbunden sind und nahe ihrer Enden Schneiden für den Rund aufweisen. Ein Längsschnitt des Kabelmantels ist nicht vorgesehen.

In dem Abmantelungswerkzeug gemäß der Patentschrift US 5,653,027 ist ein Schlitzmesser für einen Längsschnitt des Kabelmantels vorgesehen. Das Kabel wird mit einem Bügel gehalten und wird nicht weiter geführt. In der Abisolierzange gemäß der Patentanmeldung GB 2 181 986 A ist ein Schlitzmesser in einer kurzen Führung vorgesehen, durch die das Kabel gezogen werden kann.

In dem Werkzeug gemäß der Patentanmeldung DE 38 08 950 A1 aus einem Hohlkörper mit zwei Backen ist eine Abisoliervorrichtung für Kabeladern vorgesehen. Sie besteht aus Messerklingen, die außen an den Backen vorstehend angebracht sind und beim Zueinanderbewegen der Backen über- und untereinander greifen. Weiterhin ist im Inneren des Hohlkörpers ein Schlitzmesser vorgesehen, das einen Längsschnitt des Kabelmantels erlaubt.

Im Gebrauch hat sich gezeigt, dass das Werkzeug nicht so praktisch zu handhaben ist. Das an einem Ende innen im Hohlkörper angeordnete Messer für den Längsschnitt bereitet Probleme bei der Schnittführung. Das Kabelende wird in den Hohlkörper eingelegt und die Backen dann zusammen geklappt. Nun ist es notwendig, dass das herauszuziehende Kabel mit den Fingern fest an das Backenende bei dem Messer für den Längsschnitt gedrückt wird. Erfolgt dies nicht mit Sorgfalt, verläuft der Schnitt nicht immer geradlinig in der Werkzeugachse und der Mantel des Kabels wird nicht sauber aufgetrennt. Auch ist für den Schneidvorgang mehr Kraftaufwand erforderlich als notwendig.

Zum anderen steht das Messer für den Längsschnitt bei geöffnetem Hohlkörper innen ungeschützt vor, so dass die Gefahr besteht, dass man sich mit den Fingern daran verletzt.

Eine Weiterentwicklung des beschriebenen Abisolierwerkzeuges stellt der Super-Entmanteler No.15 (Art.-Nr. 30150) der Firma JOKARI dar, dessen Beschreibung im Internet unter http://www.jokari.de/produkte/techmanuals/jokari_entmantler15.pdf gefunden werden kann. Hier ist die Kabelführung längs durch das Werkzeug vorgesehen, so dass das Kabel mit den Fingern geführt werden muss. Dieses Werkzeug entspricht dem Oberbegriff des Anspruchs 1.

Auf ähnliche Weise ist ein sehr dünnes Kabel in dem Schneidwerkzeug gemäß Patent US 4,741,104 geführt. Die Führung des Kabels verläuft zentrisch in dem Werkzeug.

Die Erfindung hat sich die Aufgabe gestellt, die geschilderten Nachteile bei einem Abisolierwerkzeug gemäß dem Stand der Technik durch eine andere Anordnung des Messers für den Längsschnitt zu beseitigen.

Diese Aufgabe wird durch die im kennzeichnenden Teil des Anspruches 1 wiedergegebenen Maßnahmen gelöst.

Auf weitere Einzelheiten und Vorteile der Erfindung ist näher in den Unteransprüchen eingegangen.

Bei einem erfindungsgemäßen Abisolierwerkzeug erfolgt die Führung des Kabels, das mit einem Längsschnitt versehen werden soll, durch eine Führungsmulde in dem Hohlkörper und durch Ausnehmungen in den Längsseiten der Backen des Abisolierwerkzeugs. Das Kabel wird schräg durch das geschlossene Werkzeug gezogen und dabei sauber an dem Messer für den Längsschnitt in der Führungsmulde entlang geführt, ohne dass es einer weiteren Führung des Kabels durch die Finger bedarf. Der Längsschnitt erfolgt gerade und in gleichmäßiger Tiefe.

In der Zeichnung ist ein Ausführungsbeispiel der Erfindung wiedergegeben. Es zeigen:
Fig. 1 eine Ansicht auf das Abmantelungswerkzeug im aufgeklappten Zustand,
Fig. 2 eine Vorderansicht im aufgeklappten Zustand,
Fig. 3 einen Schnitt mit eingelegtem Kabel dazu.

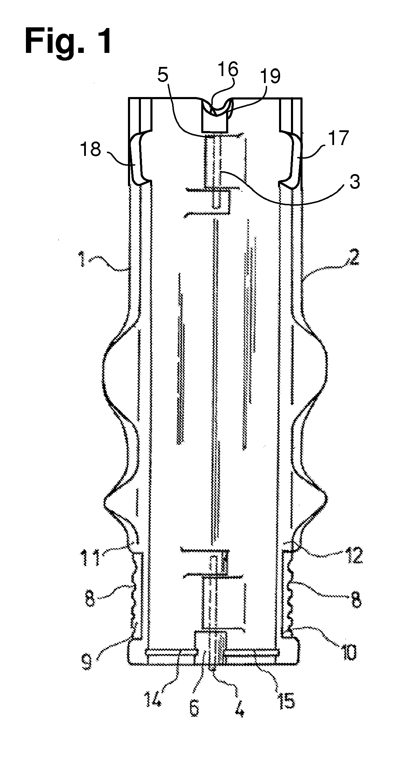

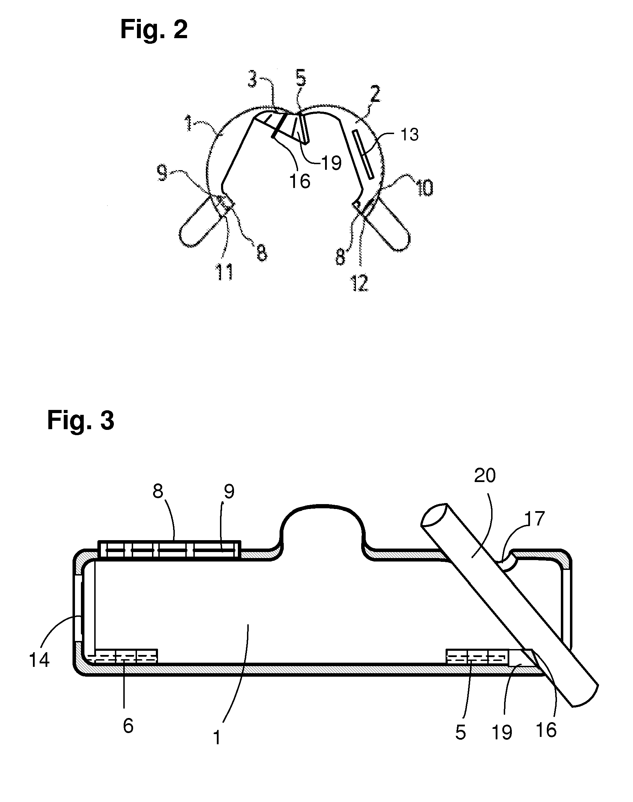

In den Fig. 1, 2, und 3 ist das Abmantelungswerkzeug in bekannter Grundform dargestellt. Die Backen 1,2 besitzen im Querschnitt eine teilzylindrische Form und an benachbarten Längsseiten verbinden sie Gelenkachsen 3, 4 in der Ausführung von Scharnieren 5, 6. Durch die Gelenkachsen 3, 4 sind die Backen 1, 2 zu einem Hohlkörper zusammenklappbar. An Längskanten 11, 12 der Backen 1, 2 ist ein Profilmesser mit Ausnehmungen 8 vorgesehen, das aus zwei gegengleichen Hälften 9, 10 besteht. die an den den Hohlkörper schließenden Längskanten 11, 12 genau gegenüberliegend angebracht sind, und zwar in paralleler Erstreckung zu den Gelenkachsen 3, 4.

Zur Freilegung der Kabeladern ist es erforderlich, die äußere Isolierung des Kabels zu entfernen. Das erfindungsgemäße Abmantelungswerkzeug besitzt dazu als Mehrzweckwerkzeug unmittelbar an der Stirnseite in den Backen 1, 2 Schneiden 14, 15. Ein bei geschlossenen Backen 1, 2 sich im Hohlkörper befindendes Kabel erfährt beim Drehen des Abmantelungswerkzeuges um die Kabelader mittels der Schneiden 14, 15 den Rundschnitt. Hiernach ist für das vollständige Abtrennen der äußeren Isolierung noch ein Längsschnitt erforderlich. Zu diesem Zweck ist das Abmantelungswerkzeug erfindungsgemäß zusätzlich mit einem Schlitzmesser 16 ausgestattet. Es befindet sich auf der den Schneiden 14, 15 gegenüberliegenden Stirnseite der Backen 1, 2 und ist hier neben der Gelenkachse 3 auf der Führungsmulde 19 angeordnet, wobei seine Schneidkante in senkrechter Stellung zur Achse des Hohlkörpers in diesen frei hineinragt. Bei Ausführung des Längsschnitts wird das Kabel 20 nach Öffnen der Backen 1, 2 aus diesen herausgenommen wieder in die Backen 1, 2 bei den Ausnehmungen 17,18 für die Kabelführung eingelegt. Beim Ziehen am Kabel 20 dringt das Schlitzmesser 16 in die Isolierung ein und beim Herausziehen des Kabels 20 vollzieht das Schlitzmesser 16 dann den Längsschnitt. An sich spielt es keine Rolle, welcher Schnitt zuerst ausgeführt wird. Doch dürfte es zweckmäßig sein, den Rundschnitt zuerst auszuführen, weil damit die Länge des abzutrennenden Isolierstückes genauer einzuhalten ist. Es versteht sich von selbst, dass anstelle der Drehung des Kabels um 180° auch das Abmantelungswerkzeug gedreht werden kann.

Durch die Anordnung des Schlitzmessers 16 auf der Führungsmulde 19 ist gewährleistet, dass der Schnittverlauf in der Isolierung praktisch parallel zur Kabelader bzw. in der Werkzeugachse verlaufend sauber ausgeführt werden kann bei geringstem Kraftaufwand. In der beschriebenen Ausführung ist das Abmantelungswerkzeug ein problemloses Mehrfachwerkzeug, indem es nacheinander durch den Rund- und Längsschnitt die äußere Isolierung eines Kabels abzutrennen vermag, ohne dass eine besondere Führung mit den Fingern erforderlich ist.

Bezugszeichen
- 1, 2: Backen
- 3,4: Gelenkachsen
- 5, 6: Scharniere
- 8: Ausnehmungen für Profilmesser
- 9, 10: Hälften des Profilmessers
- 11, 12: Längskanten der Backen
- 13: Ausschiebbare Messerklinge
- 14, 15: Schneiden
- 16: Schlitzmesser
- 17, 18: Ausnehmungen der Kabelführung
- 19: Führungsmulde
- 20: Kabel

## Patentansprüche

1. Abmantelungswerkzeug zur Entfernung der Isolierung ein- oder mehradriger Kabel durch zwei Backen (1, 2), die über gemeinsame Gelenkachsen (3,4) zu einem für die Aufnahme des zu entmantelnden Kabels aufklappbaren Hohlkörper miteinander verbunden sind und nahe ihren Enden mit Schneiden (14, 15) für den Rundschnitt versehen sind und gegenüber den Schneiden (14, 15) am anderen Ende an der Gelenkachse (3) ein Schlitzmesser (16) aufweisen, wobei das Schlitzmesser (16) sich in einer im Hohlkörper schräg liegenden Führungsmulde (19) befindet, **dadurch gekennzeichnet, dass** in die den Hohlkörper schließenden Längskanten (11, 12) Ausnehmungen (17, 18) so eingebracht sind, dass bei geschlossenem Werkzeug ein Kabel (20) für das Längsschlitzen mittels der Führungsmulde (19) und den Ausnehmungen (17, 18) derart durch den Hohlkörper geführt ist, dass das Kabel sauber an dem Schlitzmesser (16) für den Längsschnitt in der Führungsmulde (19) geführt ist, ohne dass es einer weiteren Führung des Kabels durch die Finger bedarf.

2. Abmantelungswerkzeug nach Anspruch 1, **dadurch gekennzeichnet, dass** das Kabel (20) für das Längsschlitzen in etwa 45° durch den Hohlkörper geführt ist.

3. Abmantelungswerkzeug nach Anspruch 1, **dadurch gekennzeichnet, dass** die Führungsmulde (19) einen Radius von etwa 5 mm besitzt.

4. Abmantelungswerkzeug nach Anspruch 1 **dadurch gekennzeichnet, dass** das Schlitzmesser (16) etwa 1 mm aus der Führungsmulde heraus ragt.
